(19) Europäisches Patentamt
European Patent Office
Office européen des brevets

(11) **EP 4 109 041 B1**

(12) **EUROPEAN PATENT SPECIFICATION**

(45) Date of publication and mention
of the grant of the patent:
**12.06.2024 Bulletin 2024/24**

(21) Application number: **22180720.9**

(22) Date of filing: **23.06.2022**

(51) International Patent Classification (IPC):
**G01B 11/25** $^{(2006.01)}$  **G02B 27/09** $^{(2006.01)}$
**G02B 3/00** $^{(2006.01)}$  **G02B 19/00** $^{(2006.01)}$

(52) Cooperative Patent Classification (CPC):
**G01B 11/254; G01B 11/2513; G02B 3/0056;
G02B 19/0057; G02B 27/0905; G02B 27/0944;
G02B 27/0961**

(54) **LINE PATTERN PROJECTOR FOR USE IN THREE-DIMENSIONAL DISTANCE MEASUREMENT
SYSTEM**

LINIENMUSTERPROJEKTOR ZUR VERWENDUNG IN EINEM DREIDIMENSIONALEN
ABSTANDSMESSSYSTEM

PROJECTEUR DE MOTIFS DE LIGNES À UTILISER DANS UN SYSTÈME DE MESURE DE
DISTANCE TRIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2021 US 202117358011
22.06.2022 US 202217846029**

(43) Date of publication of application:
**28.12.2022 Bulletin 2022/52**

(73) Proprietor: **HIMAX TECHNOLOGIES LIMITED
Tainan City 74148 (TW)**

(72) Inventor: **HSIAO, Ming-Shu
74148 Tainan City (TW)**

(74) Representative: **Hoefer & Partner Patentanwälte
mbB
Pilgersheimer Straße 20
81543 München (DE)**

(56) References cited:
**CN-A- 107 589 623   CN-A- 108 227 231
US-A1- 2019 068 853   US-B1- 10 317 684**

## Description

Field of the Invention

The present invention relates to three-dimensional optical distance measurement, and more particularly to, a line pattern projector for use in a three-dimensional optical distance measurement system.

Background of the Invention

Typically, three-dimensional optical distance measurement based on time-of-flight (ToF) technology relies on a flood illuminator in conjunction with an imaging sensor to provide distance measurements of an object or shape. However, a distance of projection of the flood illuminator is pretty short due to its weak optical energy.

In view of this, there is a need to provide a pattern projector which can provide high-power illumination pattern as well as considerable distance of projection.

CN108227231A discloses a fringe projection module. The fringe projection module comprises a light source, a lens and a diffraction optical element, wherein the light source is used for transmitting light beams; the lens is used for gathering the transmitted light beams; the diffraction optical element is used for receiving the incident light beams gathered by the lens, and splitting the incident light beams into a plurality of diffraction light beams, and the diffraction light beams are projected into the space along a first direction and a second direction to form two-dimensional fringe patterns.

US2019/068853A1 discloses a depth sensor including an illuminator configured to emit both of a predetermined structured light pattern and a flood fill illumination on a scene, and a camera configured to capture an image of the scene illuminated by the predetermined structured light pattern and the flood fill illumination.

US10317684B1 discloses a optical projector with on axis hologram and multiple beam splitter.

CN107589623A discloses a high-density structured light projector

Summary of the Invention

With this in mind, it is one object of the present invention to provide a regular line pattern projector for use in a three-dimensional optical distance measurement system. Embodiments of the present invention may rely on a light source array in conjunction with a lens as well as a diffractive microlens array to produce illumination pattern with regularly distributed lines. Embodiments of the present invention allow dot patterns produced by different light sources of a light source array to be overlapped to form the illumination pattern with multiple line light patterns.

This is achieved by a line pattern projector according to claim 1, and an optical distance measurement system to claim 7. The dependent claims pertain to corresponding further developments and improvements.

As will be seen more clearly from the detailed description following below, a line pattern projector is provided. The line pattern projector includes a light source array, a lens and a diffractive microlens array. The light source array includes a plurality of light sources that emit light beams, wherein the plurality of light sources are arranged along a first direction. The lens is configured to collimate the light beams. The diffractive microlens array (MLA) is configured to diffract the collimated light beams thereby to project an illumination pattern, wherein a lens pitch of the diffractive MLA with respect to the first direction is wider than a lens pitch of the diffractive MLA with respect to a second direction. The illumination pattern is formed by overlapping multiple dot patterns that are projected by the light sources; and the illumination pattern includes a plurality of line light patterns in the first direction.

As will be seen more clearly from the detailed description following below, an optical distance measurement system is provided. The optical distance measurement system comprises a flood illuminator, a line pattern projector and an image capturing device. The flood illuminator comprises at least one light source and a diffuser. The flood illuminator is configured to project a first illumination pattern. The line pattern projector is configured to project a second illumination pattern, and comprises: a light source array, a lens and a diffractive microlens array (MLA). The light source array includes a plurality of light sources that emit light beams, wherein the plurality of light sources are arranged along a first direction. The lens is configured to collimate the light beams. The diffractive MLA is configured to diffract the collimated light beams thereby to project the second illumination pattern, wherein a lens pitch of the diffractive MLA with respect to the first direction is wider than a lens pitch of the diffractive MLA with respect to a second direction, wherein the second illumination pattern is formed by overlapping multiple dot patterns that are projected by the light sources; and the second illumination pattern includes a plurality of line light patterns in the first direction. The image capturing device is configured to capture images of illumination patterns reflected from an object.

Brief Description of the Drawings

FIG. 1 illustrates a schematic diagram of an optical distance measurement system according to one embodiment of the present invention.
FIG. 2 illustrates an implementation of a dot pattern projector and a flood illuminator.
FIG. 3 illustrates a detailed schematic diagram of a dot pattern projector according to one embodiment of the present invention.
FIG. 4A, FIG. 4B, FIG. 4C, FIG. 4D, and FIG. 4E illustrate how an illumination pattern is formed by overlapping dot patterns.

FIG. 5A, FIG. 5B, FIG. 5C, FIG. 5D, and FIG. 5E illustrate how an illumination pattern is formed by interlacing dot patterns.

FIG. 6A and FIG. 6B illustrate how an arrangement of a light sources array affects a dot distribution of an illumination pattern according to different embodiments of the present invention.

FIG. 7 illustrate how arrangements of source arrays and microlens arrays, and an interlacing type affects dot distributions of the illumination pattern according to embodiments of the present invention.

FIG. 8 illustrates a detailed schematic diagram of a line pattern projector according to one embodiment of the present invention.

FIG. 9 illustrates how line light patterns are formed according to one embodiment of the present invention.

FIG. 10 illustrates a profile of a diffractive microlens array used in a line pattern projector according to one embodiment of the present invention.

FIG. 11A illustrates an illumination pattern produced by a single light source according to one embodiment of the present invention.

FIG. 11B illustrates an illumination pattern produced by multiple light sources that are arranged along a same direction according to one embodiment of the present invention.

## Detailed Description

In the following description, numerous specific details are set forth in order to provide a thorough understanding of the present embodiments. It will be apparent, however, to one having ordinary skill in the art that the specific detail need not be employed to practice the present embodiments. In other instances, well-known materials or methods have not been described in detail in order to avoid obscuring the present embodiments.

Reference throughout this specification to "one embodiment" or "an embodiment" means that a particular feature, structure or characteristic described in connection with the embodiment or example is included in at least one embodiment of the present embodiments. Thus, appearances of the phrases "in one embodiment" or "in an embodiment" in various places throughout this specification are not necessarily all referring to the same embodiment. Furthermore, the particular features, structures or characteristics may be combined in any suitable combinations and/or sub-combinations in one or more embodiments.

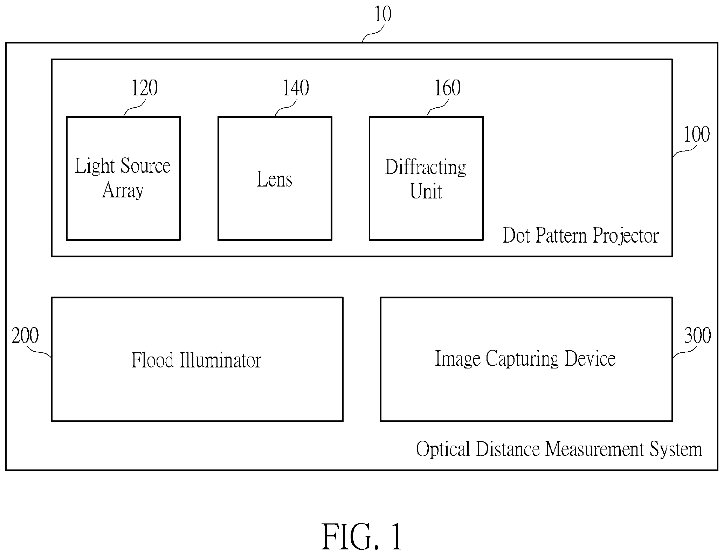

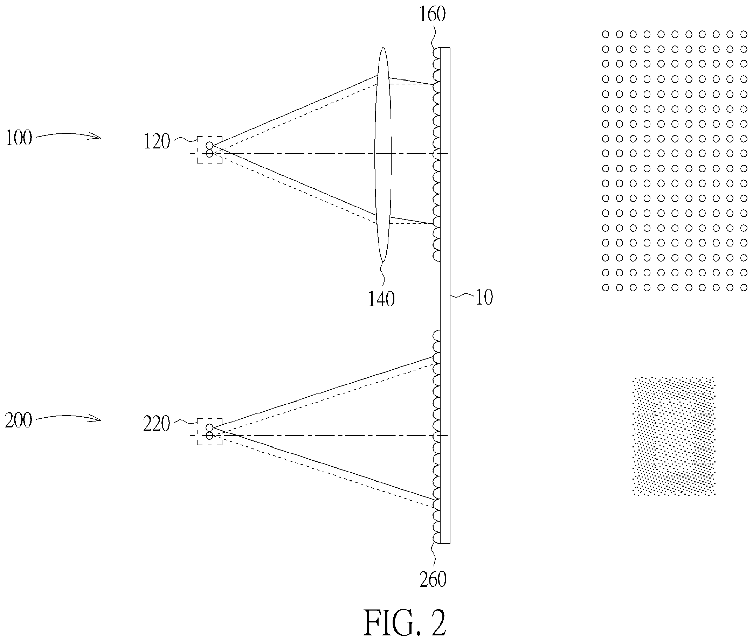

Please refer to FIG. 1, which illustrates a schematic diagram of an optical distance measurement system 10 according to one embodiment of the present invention. As illustrated, the optical distance measurement system 10 comprises a dot pattern projector 100, a flood illuminator 200 and an image capturing device 300. Both of the dot pattern projector 100 and the flood illuminator 200 are configured to project high-power illumination patterns onto an object within a field of view of the image capturing device 300. According to various embodiments of the present invention, the dot pattern projector 100 and the flood illuminator 200 may project different types of illumination patterns sequentially or simultaneously. FIG. 2 illustrates a possible arrangement of the dot pattern projector 100 and the flood illuminator 200. As illustrated, the dot pattern projector 100 (which comprises a light source 120, a collimated lens 140, a diffracting unit 160, and projects a dot illumination pattern) and the flood illuminator 200 (which comprises a light source 220 and a diffracting unit 260, and projects a flood illumination pattern) share a same substrate. The dot pattern projector 100 and the flood illuminator 200 may use separate diffracting units 160 and 260, both of which are disposed on a shared substrate 10. The diffracting unit 160 of the dot pattern projector 100, which may be a microlens array or an optical diffracting unit (DOE) (the DOE not being according to the claimed invention), is disposed on the shared substrate 10 that the diffracting unit 260 (which may be a microlens array or an optical diffracting unit (DOE), the DOE not being according to the claimed invention) of the flood illuminator 200 is disposed on. An advantage of sharing a same substrate and arranging two diffracting unit adjacent to each other is to reduce the complexity of manufacturing process. In this regards, etching or mold reversal of the dot pattern projector 100 and the flood illuminator 200 can be done together, which makes the cost lower, and also reduces the assembly time.

The image capturing device 300 may comprise (but not limited to) a focusing lens, a filter and an image sensor, such as, a complementary metal-oxide semiconductor (CMOS) or a charge-coupled device (CCD) sensor (not shown). The image capturing device 300 is configured to capture images of illumination patterns reflected from the object. According to the images captured by the image sensor 300, depth information regarding the object can be measured

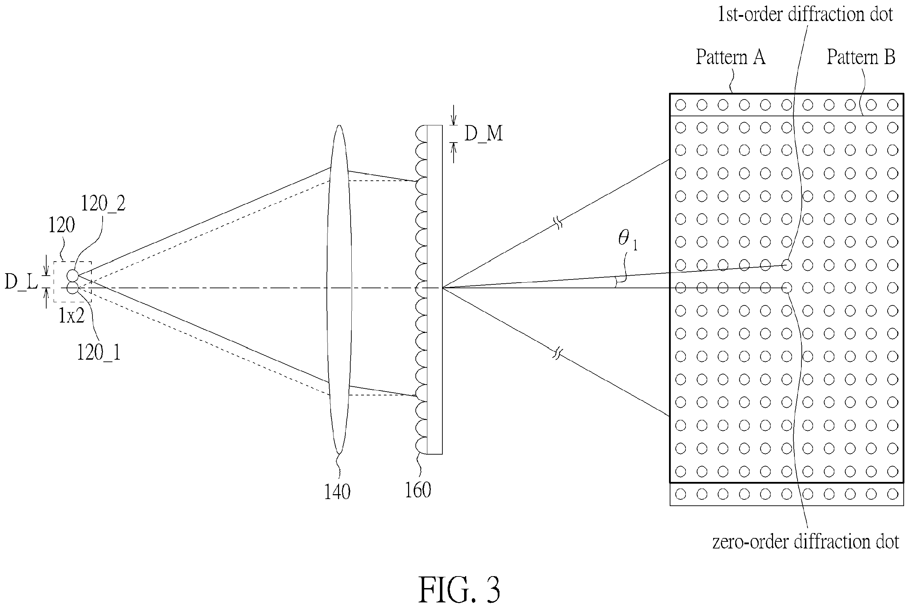

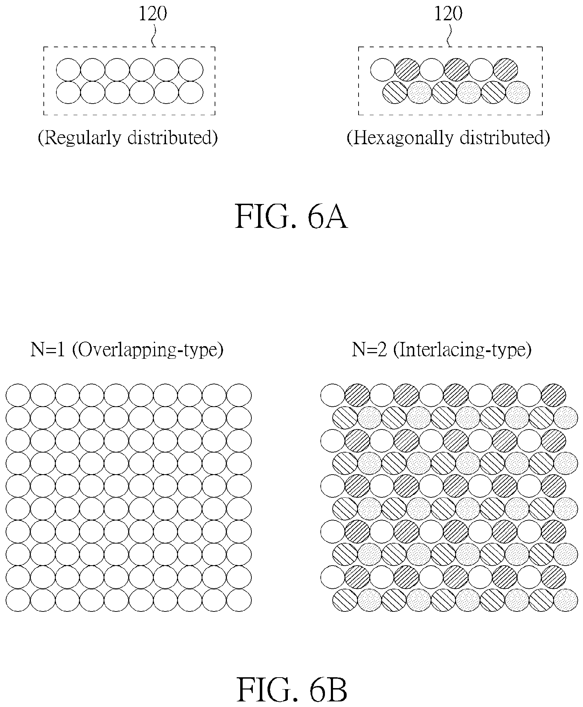

FIG. 3 illustrates a schematic diagram of the dot pattern projector 100 according to one embodiment of the present invention. As illustrated, the dot pattern projector 100 comprises a light source array 120, a lens 140 and a diffracting unit 160. The light source array 120 is arranged to emit light beams, and includes a plurality of light sources 120_1-120_N that are arranged in an array form. According to various embodiment, the light sources 120_1-120_N may be regularly distributed or hexagonally distributed as shown by FIG. 6A. Please note that the number of the light sources 120_1-120_N in the drawings is just for illustrative purpose only.

Preferably, the light sources 120_1-120_N could be a vertical-cavity surface-emitting laser (VCSEL) and are equally separated by a pitch $D\_L$. The lens 140 is arranged to collimate the light beams that are emitted by the light source array 120. Preferably, a distance between of the light source array 120 and an optical center of the lens 140 is identical to an effective focal length D_EFL of the lens 140. Accordingly, with the lens 140, the light beams could be more condensed, thereby allowing dots in the illumination patterns projected by the dot pattern projector 100 to have smaller sizes and higher contrast. The diffracting unit 160 is configured to diffract the light beams thereby to project the illumination patterns having regularly distributed dots as shown by FIG. 2. According to various embodiments, the diffracting unit 160 could be a microlens array (MLA). According to an example useful to understand the invention, the diffracting unit could be a diffraction optical element (DOE):

In addition, the flood illuminator 200 may comprises a light source and a diffuser, and use a DOE or a MLA as the diffuser. Once the DOE is used as the diffracting unit 160 in the dot pattern projector 100, a DOE will also be used as the diffuser in the flood illuminator 200. On the other hand, once the MLA is used as the diffracting unit 160 in the dot pattern projector 100, a MLA will also be used as the diffuser in the flood illuminator 200. In the case where the MLA is used as the diffracting unit 160, the MLA 160 comprises a plurality of micro lenses that have a plano-convex shape and a lens pitch between two neighboring unit lenses of the MLA 160 is D_M. In the case where the DOE is used as the diffracting unit 160, a cell pitch between neighboring unit cells of the DOE 160 is D_E. In preferable embodiments, the lens pitch D_M of the MLA 160 or the cell pitch D_E of the DOE 160 could be larger than 10μm, which is relatively easy for fabrication.

Distribution of dots projected by the light sources 120_1-120_N can be determined according to various parameters. In one embodiment, assuming that a fanout angle between a dot of zero-order diffraction and a dot of mth-order diffraction of the dot pattern projected by a single light source is $\theta_m$ and a wavelength of the light beam emitted by the light sources is $\lambda$, a lens pitch of the MLA 160 is D_M, there will be the following relationship between these parameters:

$$D\_M \times \sin\theta_m = m\lambda\,;$$

where m is the diffraction order. In view of this, the fanout angle $\theta_1$ between a dot of the zero-order diffraction and a dot of the 1st-order diffraction of the dot pattern will be:

$$\theta_1 = \sin^{-1}\left(\frac{\lambda}{D\_M}\right).$$

In addition, as shown by FIG. 2, the dot pattern (pattern B) projected by the light source 120_2 that is not positioned at the optical axis of the lens 140 will be shifted in vertical direction compared to the dot pattern (pattern A) projected by the light source 120_1 that is positioned at the optical axis of the lens 140. According to various embodiments, the illumination pattern projected by dot pattern projector 100 is formed by overlapping or interlacing dot patterns projected by different light sources.

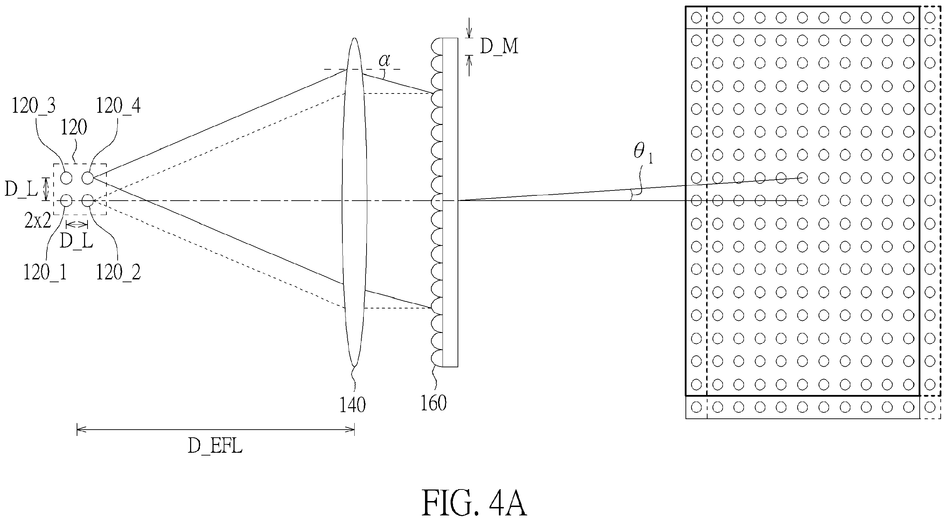

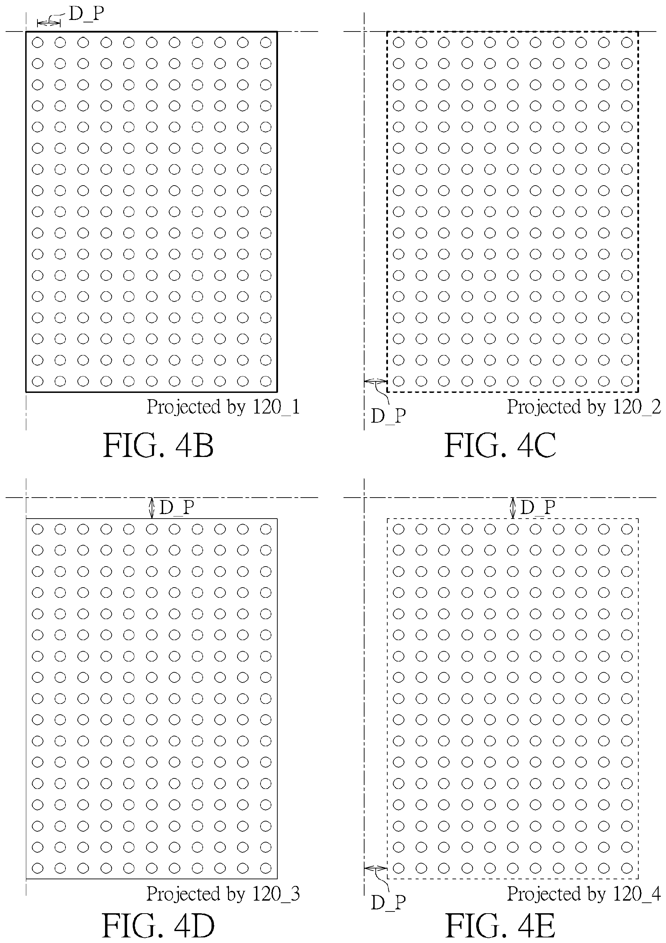

Please refer to FIGS. 4A-4E for understanding how the illumination pattern is formed by overlapping different dot patterns of different light sources according to one embodiment of the present invention. In such embodiment, the light source array 120 is a 2x2 array including light sources 120_1-120_4. FIG. 4B and FIG. 4C illustrate dot patterns produced by the light sources 120_1-120_2 that are positioned at the optical axis of the lens 140, while FIG. 4D and FIG. 4E illustrate dot patterns produced by the light sources 120_3-120_4 that are not positioned at the optical axis of the lens 140. The collimated light beams of light sources 120_3-120_4 will deviate from the optical axis of the lens by a deviation angle $\alpha$, where the deviation angle $\alpha$ can be determined by:

$$\alpha = \tan^{-1}\left(\frac{D\_L}{D\_EFL}\right).$$

(D_L is a pitch between the neighboring light sources; D_EFL is an effective focal length of the lens 140). Therefore, the dot patterns projected by the light sources 120_3-120_4 will be shifted in vertical direction compared to the dot patterns projected by the light sources 120_1-120_2.

In order to exactly overlap the dot patterns, it is necessary to have:

$$\sin\alpha = \sin\theta_1\,.$$

That is, the deviation angle $\alpha$ by which the collimated light beams of the light sources deviate from the optical axis needs to be identical to the fan-out angle $\theta_1$ between the dot of the zero-order diffraction and the dot of the 1st-order diffraction. If the light source pitch D_L, the effective focal length D_EFL and the lens pitch D_M (the diffracting unit 160 is a MLA) or the cell pitch D_E (if the diffracting unit 160 is a DOE) are well controlled to satisfy $\sin\alpha=\sin\theta$, the dot patterns will be shifted by exactly one dot pitch D_P (i.e., a distance between neighboring dots in the dot pattern) in vertical or horizontal direction compared to each other, thereby forming an overlapping-type illumination pattern.

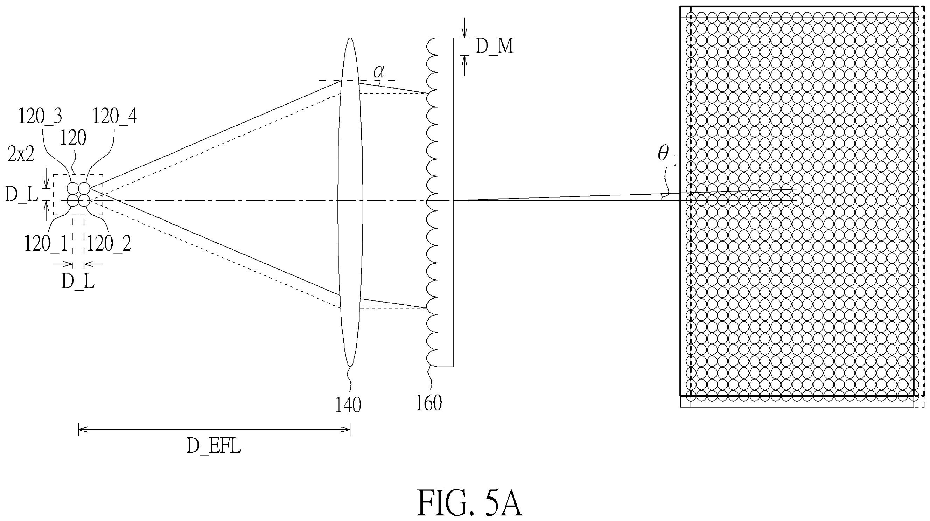

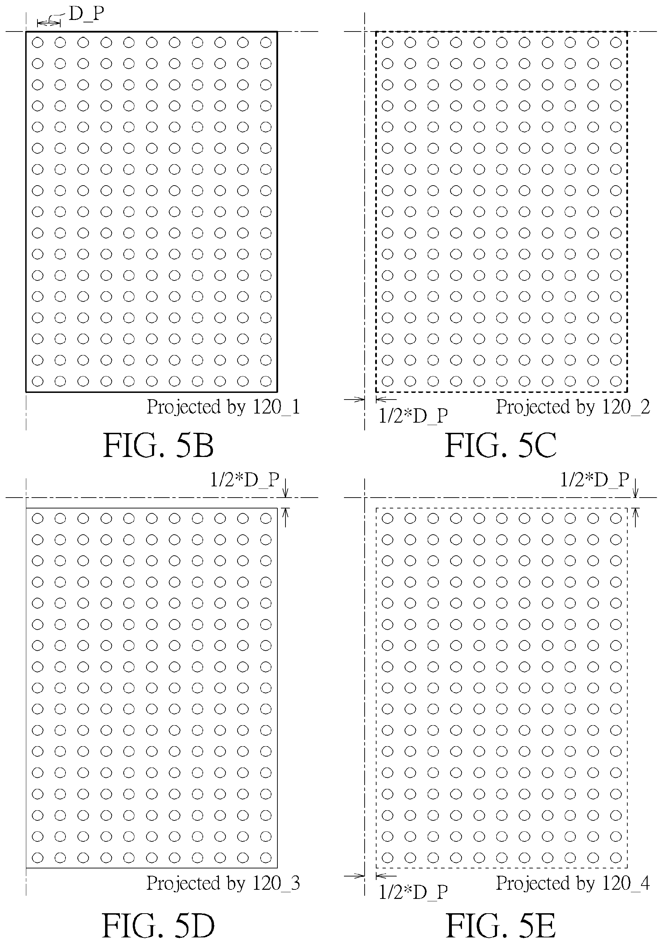

Please refer to FIGS. 5A-5E for understanding how the illumination pattern is formed by interlacing different dot patterns of different light sources according to one embodiment of the present invention. In such embodiment, the light source array 120 is a 2x2 array including light sources 120_1-120_4. FIG. 5B and FIG. 5C illustrate dot patterns produced by the light sources 120_1-120_2 that are positioned at the optical axis of the lens 140, while FIG. 5D and FIG. 5E illustrate dot patterns produced by the light sources 120_3-120_4 that are not positioned at the optical axis of the lens 140. The collimated light beams of light sources 120_3-120_4 will deviate from the optical axis of the lens by the deviation angle $\alpha$, where the deviation angle $\alpha$ is also determined by:

$$\alpha = \tan^{-1}\left(\frac{D\_L}{D\_EFL}\right).$$

In order to interlacing the dot patterns, it is necessary to have:

$$N \times \sin\alpha = \sin\theta.$$

An interfacing factor N will determine how dot patterns are interlaced. In a case where N is 1, the dot pattern projected by the light sources that are not positioned at the optical axis will be shifted by one dot pitch D_P in vertical or horizontal direction compared to each other, thereby forming the overlapping-type illumination pattern as shown by FIG. 4A. In a case where N is 2, the dot pattern projected by the light sources that are not positioned at the optical axis will be shifted by 1/2 dot pitch D_P in vertical or horizontal direction compared to each other, thereby forming the interlacing-type illumination pattern as shown by FIG. 4A. In a case where N is 3, the dot pattern projected by the light sources that are not positioned at the optical axis will be shifted by 1/3 dot pitch D_P in vertical or horizontal direction compared to each other, which also forms the interlacing-type illumination pattern.

In view of above, the lens pitch D_M of diffracting unit 160 (if the diffracting unit 160 is a MLA) or the cell pitch D_E of the diffracting unit 160 (if the diffracting unit 160 is a DOE, in an example not according to the claimed invention) can determine the fan-out angle $\theta$, which affects dot distributions (e.g., dot density) of the dot pattern projected by a single light source. In addition, the light source pitch D_L and the effective focal length D_EFL of the lens 140 can determine the fan-out angle $\theta$, which affects how a dot pattern are shifted compared to each other.

Assuming that the effective focal length D_EFL is 2mm and the light source pitch is 30$\mu$m, the lens pitch D_M of diffracting unit 160 (if the diffracting unit 160 is a MLA) or the cell pitch D_E of the diffracting unit 160 can be determined by:

$$N \times \sin\left[\tan^{-1}\left(\frac{D\_L}{D\_EFL}\right)\right] = \frac{\lambda}{D\_M}$$

or

$$N \times \sin\left[\tan^{-1}\left(\frac{D\_L}{D\_EFL}\right)\right] = \frac{\lambda}{D\_E}.$$

Therefore, the lens pitch D_M or the cell pitch D_E of diffracting unit 160 will be around 62.7$\mu$m when N=1 (i.e., the overlapping-type) or 31.3$\mu$m when N=2 (i.e., the interlacing-type). Furthermore, to implement an illumination pattern covering a field of interest (FOI): 60°(H) by 40°(V), dimensions of the illumination pattern can be determined by:

$$D\_M \times \sin\left(\theta_{m_H}\right) = m_H \times \lambda \,;$$

and

$$D\_M \times \sin\left(\theta_{m_V}\right) = m_V \times \lambda \,;$$

where $\theta_{mH}=(60/2)$ and $\theta_{mV}=(40/2)$. Therefore, in the overlapping-type (N=1), the diffraction order in the horizontal direction $m_H$ will be $\pm 33$, and the diffraction order in the vertical direction $m_V$ will be $\pm 22$. In in the interlaced-type (N=2), the diffraction order in the horizontal direction $m_H$ will be $\pm 16$, and the diffraction order in the vertical direction $m_V$ will be $\pm 11$. Accordingly, a total number of dots in the illumination pattern can be determined by:

$$N^2 \times \left(2\left|m_H\right| + 1\right) \times \left(2\left|m_V\right| + 1\right).$$

In the case where N=1, $m_H = \pm 33$ and $m_V = \pm 22$, the total number of dots will be around 3015, while in the case where N=2, $m_H = \pm 16$ and $m_V = \pm 11$, the total number of dots will be around 3036. In view of this, it is possible to change the lens pitch D_M (or cell pitch D_M) in conjunction with the interlacing factor "N" to render similar number of dots in a given FOI. This significantly improves flexibility of design and fabrication of the diffracting unit 160.

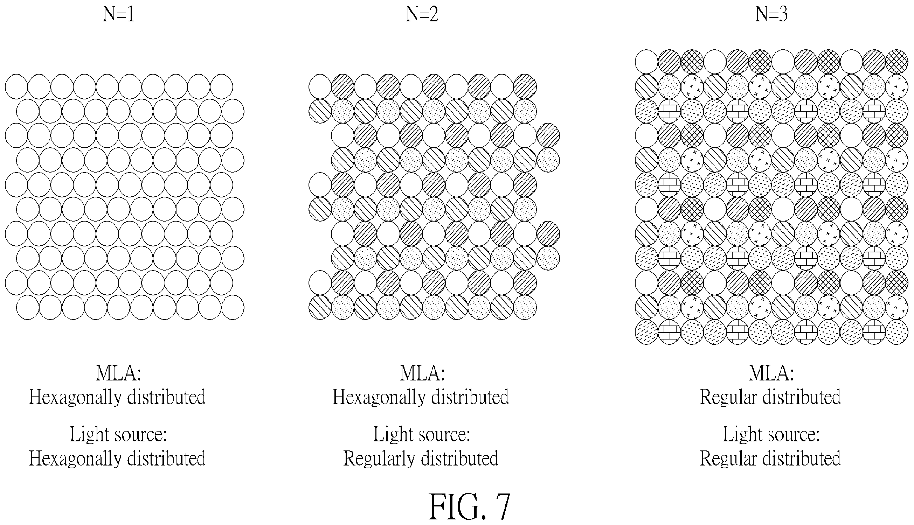

FIG. 6A and FIG. 6B illustrate arrangements of different light source arrays 120 and their corresponding illumination patterns. As illustrated by drawing, distributions of dots in the illumination patterns inherits distributions of the light sources in the light source array 120. FIG. 7 illustrates illumination patterns with respect to combinations of different light source arrangements, unit lens arrangements of MLA, and different interlacing types.

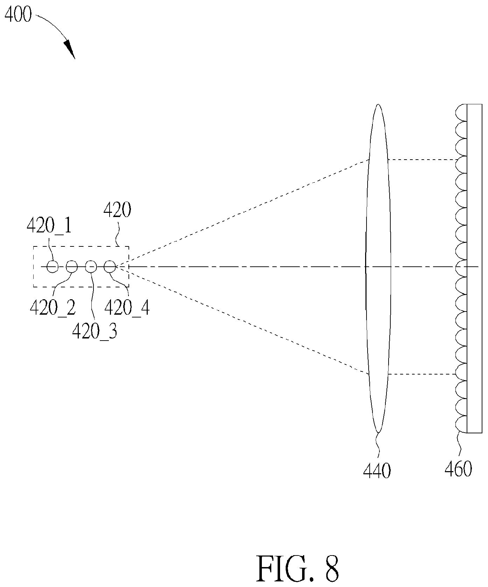

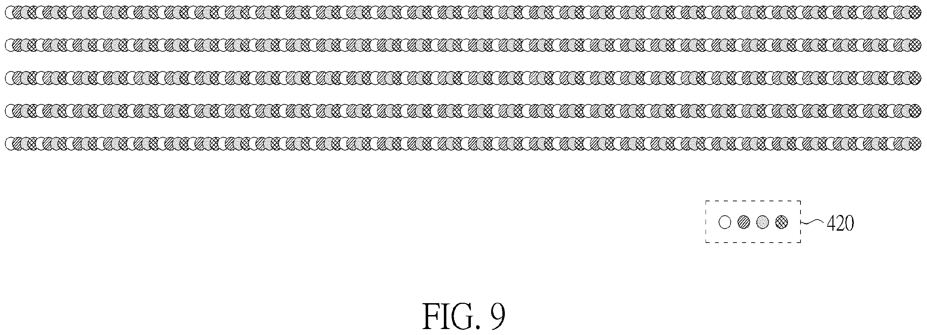

In addition to the above-mentioned dot pattern projector, the present invention also relies on a line pattern projector to provide illumination patterns for three-dimensional distance measurement in some embodiments. Please refer to FIG. 8, which illustrates a line pattern projector 400 that is operable to project illumination patterns consisting of multiple straight-line light patterns. As illustrated, the line pattern projector 400 comprises a light source array 420, a lens 440 and a diffractive MLA 460. The light source array 420 is arranged to emit light beams and includes a plurality of light sources 420_1-420_4 that are arranged in a line form. Please note that the number of light sources included in the light source array may vary depending on different requirements. There could be more or fewer light sources in a single light source array in various embodiments of the present invention. Preferably, each of the light sources 420_1-420_4 could be a vertical-cavity surface-emitting laser (VCSEL) and is equally separated by a same pitch. The lens 440 is arranged to collimate the light beams that are emitted by the light source array 420. Preferably, a distance between of the light source array 420 and an optical center of the lens 440 could be identical to an effective focal length of the lens 440. With the lens 440, the light beams could be more condensed, thereby allowing line light patterns in the illumination patterns projected by the line pattern projector 400 to be thinner and have higher contrast. As show by FIG. 9, the light source 420_1-420_4 of the light source 420 could produce dot patterns. These dot patterns could be overlapped in the horizontal direction, thereby forming the illumination pattern with multiple straight-line light patterns.

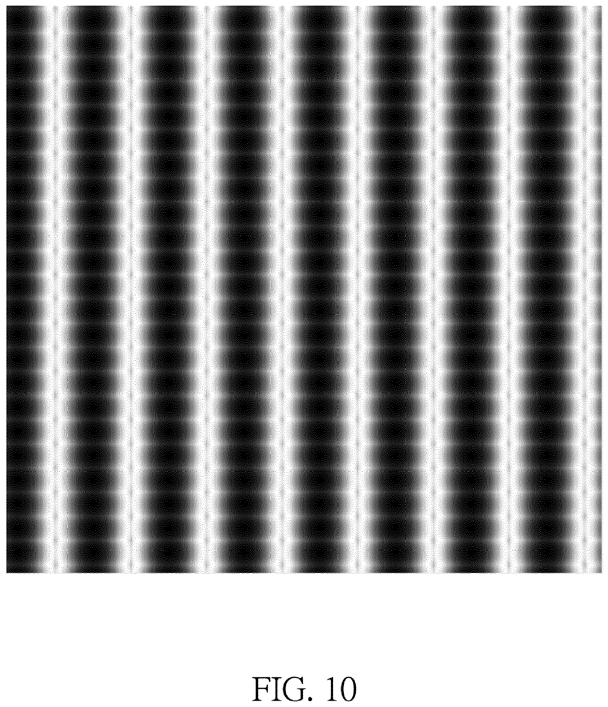

As mentioned above, the illumination pattern of the line pattern projector 400 is produced by slightly shifting dot patterns projected by the light sources 420_1-420_4 in the horizontal direction. In order to achieve this, the diffractive MLA 460 has a profile as shown by FIG. 10. In one embodiment, the lens pitch (i.e., center to center) with respect to the horizontal direction could be 60$\mu$m, the lens pitch with respect to the vertical direction could be 20$\mu$m, a maximum sag height of the diffractive MLA 460 on the convex surface could be 33.69um, a maximum slope of the diffractive MLA 460 could be about 73 degrees. In the above embodiment, the light sources 420_1-420_4 are arranged along the horizontal direction, and the lens pitch with respect to the horizontal direction is wider than the lens pitch with respect to the vertical direction, such that the dot patterns projected by the light sources 420_1-420_4 could be slightly shifted in the horizontal direction and thus overlapped in the horizontal direction, thereby to form multiple straight-line patterns in the horizontal direction.

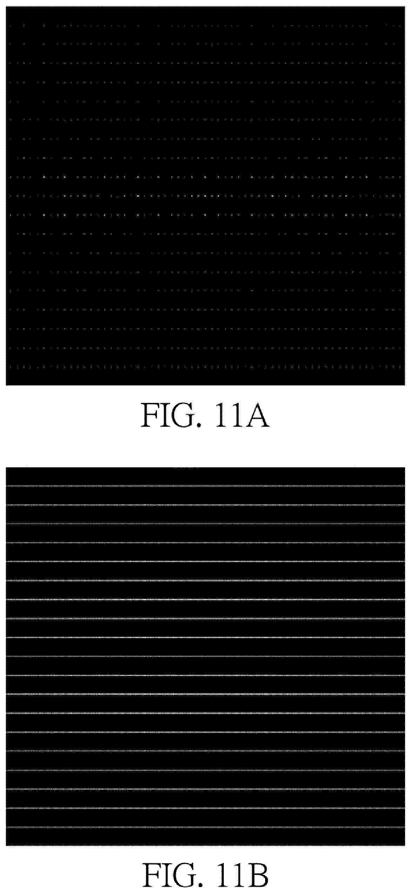

FIG. 11A illustrates an illumination pattern produced by a single light source. As mentioned above, the lens pitch of the diffractive MLA 460 is wider in the horizontal direction. Therefore, a fan-out angle between the dot patterns relative to the horizontal direction would be smaller, such that the dot patterns would be shifted slighter in the horizontal direction. FIG. 11B illustrates an illumination pattern produced by light sources that are arranged along the horizontal direction. Since the light sources are arranged along the horizontal direction, this causes the dot patterns to be overlapped more in the horizontal direction.

In some embodiments, the light sources 420_1-420_4 may be arranged along the vertical direction, and the lens pitch of the diffractive MLA 460 in the vertical direction may be wider than the lens pitch of the diffractive MLA 460 in the horizontal direction, such that the dot patterns projected by the light sources 420_1-420_4 could be slightly shifted in the vertical direction and thus overlapped in the vertical direction, thereby to form multiple straight-line light patterns in the vertical direction. In some embodiments of the present invention, the light sources 420_1-420_4 may be arranged along a first direction, and the lens pitch of the diffractive MLA 460 in the first direction is wider than the lens pitch of the diffractive MLA 460 in a second direction, such that the dot patterns projected by the light sources 420_1-420_4 could be slightly shifted in the first direction and thus overlapped in the first direction, thereby to form multiple straight-line light patterns in the first direction.

Similar to the dot pattern projector 100, the line pattern projector may be utilized in conjunction with the flood illuminator 200 in an optical distance measurement system for projecting patterns onto an object for the image capturing device 300 to derive depth information. Moreover, the line pattern projector 400 and the flood illuminator 200 may share a same substrate. The line pattern projector 400 and the flood illuminator 200 may use separate diffracting units 460 and 260, both of which are disposed on a shared substrate 10. The diffractive MLA 460 of the line pattern projector 100, which is an MLA array, is disposed on the shared substrate 10 that the diffracting unit 260, which is also an MLA, of the flood illuminator 200 is disposed on. An advantage of sharing a same substrate and arranging two diffracting units adjacent to each other is to reduce the complexity of manufacturing process. In this regard, etching or mold reversal of the line pattern projector 400 and the flood illuminator 200 can be done together, which makes the cost lower, and also reduces the assembly time.

In conclusion, embodiments of the present invention provide a dot line pattern projector and a line pattern projector that are intended for use in a three-dimensional optical distance measurement system. The dot pattern projector or the line pattern projector of the present invention can be used in conjunction with a flood illuminator in an optical distance measurement system, thereby to provide high-power illumination patterns and considerably long distance of projection. Both of a diffuser of the flood illuminator and a diffracting unit of the dot pattern projector or the line pattern projector can be implemented with same types of optical elements (e.g. both are MLA or DOE, the latter not being according to the claimed invention), thereby simplifying fabrication of the optical distance measurement system. Moreover, embodiments of the present invention allow dot patterns produced by different light sources of a light source array to be overlapped or interlaced, such that parameters of components of the dot pattern projector could have wide ranges of adjustment. This significantly improves the flexibility of the design and the fabrication of the dot pattern projector. Moreover, as the line light patterns of the illumination pattern projected by the line pattern projector is produced by shifting and overlapping the dot patterns, it can achieve better the uniformity of illumination pattern.

**Claims**

1. A line pattern projector (400), comprising:

   a light source array (420), including a plurality of light sources (420_1-420_4) that emit light beams, wherein the plurality of light sources are arranged along a first direction;
   a lens (440), configured to collimate the light beams; and
   a diffractive microlens array, MLA (460), configured to diffract the collimated light beams thereby to project an illumination pattern, wherein a lens pitch of the diffractive MLA (460) with respect to the first direction is wider than a lens pitch of the diffractive MLA (460) with respect to a second direction;
   wherein the illumination pattern is formed by overlapping multiple dot patterns that are projected by the light sources (420_1-420_4); and
   the illumination pattern includes a plurality of line light patterns in the first direction.

2. The line pattern projector (400) of claim 1, wherein each of the light sources (420_1-420_4) is a vertical-cavity surface-emitting laser, VCSEL.

3. The line pattern projector (400) of claim 1, wherein a light source pitch between two neighbor light sources (420_1-420_4) is regular.

4. The line pattern projector (400) of claim 1, wherein a maximum sag height of the diffractive MLA (460) is about 33.69um, and a maximum slope of the diffractive MLA (460) is about 73 degrees.

5. The line pattern projector (400) of claim 1, wherein the first direction is perpendicular to the second direction.

6. The line pattern projector of claim 1, wherein the first direction is the horizontal direction, while the second direction is the vertical direction.

7. An optical distance measurement system (1) comprising a line pattern projector (400) according to any one of claims 1 to 6, wherein:

   a flood illuminator (200), including at least one light source (220) and a diffuser (260), configured to project a first illumination pattern;

the line pattern projector (400); and
an image capturing device (300), configured to capture images of illumination patterns reflected from an object.

8. The optical distance measurement system (1) of claim 7, wherein the diffuser (260) of the flood illuminator (200) is a microlens array.

9. The optical distance measurement system (1) of claim 7, wherein the diffuser (260) of the flood illuminator (200) is a diffractive optical element.

**Patentansprüche**

1. Linienmusterprojektor (400), aufweisend:

   eine Lichtquellenanordnung (420), die eine Mehrzahl von Lichtquellen (420_1 - 420_4) aufweist, welche Lichtstrahlen emittieren, wobei die Mehrzahl von Lichtquellen entlang einer ersten Richtung angeordnet sind;
   eine Linse (440), die eingerichtet ist, die Lichtstrahlen parallelzurichten; und
   eine Anordnung beugender Mikrolinsen, MLA (460), die eingerichtet ist, die parallelgerichteten Lichtstrahlen zu beugen, um dadurch ein Illuminationsmuster zu projizieren, wobei ein Linsenabstand der beugenden MLA (460) bezüglich der ersten Richtung weiter ist als ein Linsenabstand der beugenden MLA (460) bezüglich einer zweiten Richtung;
   wobei das Illuminationsmuster durch ein Überlappen mehrerer Punktmuster ausgebildet wird, welche durch die Lichtquellen (420_1 - 420_4) projiziert werden; und das Illuminationsmuster eine Mehrzahl von Linienlichtmustern in der ersten Richtung aufweist.

2. Linienmusterprojektor (400) gemäß Anspruch 1, wobei jede der Lichtquellen (420_1 - 420_4) ein Vertical-Cavity-Surface-Emitting-Laser, VCSEL, ist.

3. Linienmusterprojektor (400) gemäß Anspruch 1, wobei ein Lichtquellenabstand zwischen zwei Nachbarlichtquellen (420_1 - 420_4) regelmäßig ist.

4. Linienmusterprojektor (400) gemäß Anspruch 1, wobei eine maximale Senkungshöhe der beugenden MLA (460) etwa 33,69 um ist und eine maximale Neigung der beugenden MLA (460) etwa 73 Grad ist.

5. Linienmusterprojektor (400) gemäß Anspruch 1, wobei die erste Richtung senkrecht zu der zweiten Richtung ist.

6. Linienmusterprojektor (400) gemäß Anspruch 1, wobei die erste Richtung die horizontale Richtung ist, während die zweite Richtung die vertikale Richtung ist.

7. Optisches Distanzmesssystem (1), das einen Linienmusterprojektor (400) gemäß einem der Ansprüche 1 bis 6 aufweist, wobei:

ein Flutlicht (200), das mindestens eine Lichtquelle (220) und einen Diffusor (260) aufweist, die eingerichtet sind, ein erstes Illuminationsmuster zu projizieren;
den Linienmusterprojektor (400); und
eine Bildaufnahmevorrichtung (300), die eingerichtet ist, Bilder von Illuminationsmustern aufzunehmen, die von einem Objekt reflektiert werden.

8. Optisches Distanzmesssystem (1) gemäß Anspruch 7, wobei der Diffusor (260) des Flutlichts (200) ein Mikrolinsenfeld ist.

9. Optisches Distanzmesssystem (1) gemäß Anspruch 7, wobei der Diffusor (260) des Flutlichts (200) ein beugendes optisches Element ist.

**Revendications**

1. Projecteur de motifs de lignes (400), comprenant :

un réseau de sources lumineuses (420), comprenant une pluralité de sources lumineuses (420_1-420_4) qui émettent des faisceaux lumineux, dans lequel la pluralité de sources lumineuses sont agencées le long d'une première direction ;
une lentille (440), configurée pour collimater les faisceaux lumineux ; et
un réseau de microlentilles de diffraction, MLA (460), configuré pour diffracter les faisceaux lumineux ainsi collimatés pour projeter un motif d'éclairage, dans lequel un pas de lentilles du MLA de diffraction (460) par rapport à la première direction est plus large qu'un pas de lentilles du MLA de diffraction (460) par rapport à une seconde direction ;
dans lequel le motif d'éclairage est formé par chevauchement de multiples motifs de points qui sont projetés par les sources lumineuses (420_1-420_4) ; et le motif d'éclairage comprend une pluralité de motifs lumineux de lignes dans la première direction.

2. Projecteur de motifs de lignes (400) de la revendication 1, dans lequel chacune des sources lumineuses (420_1-420_4) est un laser à émission de surface à cavité verticale, VCSEL.

3. Projecteur de motifs de lignes (400) de la revendication 1, dans lequel un pas de sources lumineuses entre deux sources lumineuses voisines (420_1-420_4) est régulier.

4. Projecteur de motifs de lignes (400) de la revendication 1, dans lequel une hauteur sagittale maximale du MLA diffractif (460) est d'environ 33,69 um, et une pente maximale du MLA diffractif (460) est d'environ 73 degrés.

5. Projecteur de motifs de lignes (400) de la revendication 1, dans lequel la première direction est perpendiculaire à la seconde direction.

6. Projecteur de motifs de lignes de la revendication 1, dans lequel la première direction est la direction horizontale, tandis que la seconde direction est la direction verticale.

7. Système optique de mesure de distance (1) comprenant un projecteur de motifs de lignes (400) selon l'une quelconque des revendications 1 à 6, dans lequel :

un dispositif d'éclairage à faisceau large (200), comprenant au moins une source lumineuse (220) et un diffuseur (260), configuré pour projeter un premier motif d'éclairage ;
le projecteur de motifs de lignes (400) ; et
un dispositif de capture d'image (300), configuré pour capturer des images de motifs d'éclairage réfléchis par un objet.

8. Système optique de mesure de distance (1) de la revendication 7, dans lequel le diffuseur (260) du dispositif d'éclairage à faisceau large (200) est un réseau de microlentilles.

9. Système optique de mesure de distance (1) de la revendication 7, dans lequel le diffuseur (260) du dispositif d'éclairage à faisceau large (200) est un élément optique de diffraction.

EP 4 109 041 B1

FIG. 1

FIG. 2

FIG. 3

FIG. 4A

EP 4 109 041 B1

D_P

Projected by 120_1

FIG. 4B

D_P

Projected by 120_2

FIG. 4C

D_P

Projected by 120_3

FIG. 4D

D_P

D_P

Projected by 120_4

FIG. 4E

FIG. 5A

EP 4 109 041 B1

D_P

Projected by 120_1

## FIG. 5B

1/2*D_P

Projected by 120_2

## FIG. 5C

1/2*D_P

Projected by 120_3

## FIG. 5D

1/2*D_P

1/2*D_P

Projected by 120_4

## FIG. 5E

EP 4 109 041 B1

120

(Regularly distributed)

120

(Hexagonally distributed)

FIG. 6A

N=1 (Overlapping-type)

N=2 (Interlacing-type)

FIG. 6B

16

N=1

MLA:
Hexagonally distributed

Light source:
Hexagonally distributed

N=2

MLA:
Hexagonally distributed

Light source:
Regularly distributed

N=3

MLA:
Regular distributed

Light source:
Regular distributed

FIG. 7

EP 4 109 041 B1

FIG. 8

FIG. 9

FIG. 10

FIG. 11A

FIG. 11B

**EP 4 109 041 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108227231 A
- US 2019068853 A1
- US 10317684 B1
- CN 107589623 A